# EUROPÄISCHE PATENTSCHRIFT

(11) **EP 3 042 867 B1**
(45) Veröffentlichungstag und Bekanntmachung des Hinweises auf die Patenterteilung: **11.10.2017**
(21) Anmeldenummer: 15150568.2
(22) Anmeldetag: 09.01.2015
(51) Int. Cl.: B65G 1/04

(54) **Bediengerät für eine Kommissioniervorrichtung**
Operating device for a picking system
Appareil de commande pour un dispositif de préparation de commandes

(43) Veröffentlichungstag der Anmeldung: 13.07.2016
(73) Patentinhaber: Becton Dickinson Rowa Germany GmbH, 53539 Kelberg (DE)
(72) Erfinder: Hellenbrand, Christoph, 56761 Kaifenheim (DE); Gross, Dietmar, 53539 Kelberg (DE)
(74) Vertreter: Zenz Patentanwälte Partnerschaft mbB

(56) Entgegenhaltungen:
- EP-A1- 2 433 882
- EP-A1- 2 522 599
- EP-A1- 2 581 328
- WO-A1-2009/079678
- WO-A1-2009/098573
- DE-U1- 29 817 529

## Beschreibung

Die vorliegende Erfindung betrifft ein Bediengerät für eine Kommissioniervorrichtung mit gegenüber angeordneten Lagerplätzen nach dem Oberbegriff des Anspruchs 1. Aus dem Stand der Technik sind zahlreiche Bediengeräte für Kommissioniervorrichtungen zur automatischen Ein- und Auslagerung von Stückgütern, insbesondere Arzneimittelpackungen, bekannt.

Aus der EP 2 581 328 A1 ist ein Bediengerät nach dem Oberbegriff des Anspruchs 1 bekannt. Zum Einlagern von Stückgütern werden diese über eine Öffnung in dem Ablageplatz angehoben und in das Lagerfach gehoben, wobei der Hebemechanismus durch die Öffnung des Ablageplatzes und des Fachbodens bewegt wird. Wird der Ablageplatz erreicht wird das Stückgut abgesenkt. Da das Anheben des Stückgutes dieses kipplabil macht wird das Stückgut während des Transports von seitlichen Stützflanken stabilisiert. Die Auslagerung eines Stückguts findet entsprechend gegenläufig statt.

Aus der DE 195 09 951 ist beispielsweise ein Bediengerät zum Ein- und Auslagern von quaderförmigen Kleinstückgütern, zum Beispiel Arzneimittelpackungen, bekannt. Mit dem in dieser Druckschrift beschriebenen Bediengerät können Stückgüter von Lagerplätzen auf horizontalen, langgestreckten Regalböden ausgelagert und auf diesen gelagert werden. Die Regalböden bilden, zusammen mit in gewissen Abständen angeordneten Regalwänden, ein Regal mit einer Vielzahl von Lagerplätzen. Mehrere hintereinander und/oder nebeneinander angeordnete Lagerplätze bilden ein (virtuelles) Regalfach.

Zum Auslagern eines Stückguts von einem vorgegebenen Lagerplatz wird das Bediengerät in vertikaler und horizontaler Richtung vor die Frontseite des Regalfachs mit dem entsprechenden Lagerplatz verfahren und stirnseitig vor dem Regalboden positioniert. Sobald das Bediengerät positioniert ist, werden Klemmbacken in das Regalfach hineingefahren und dann zusammengefahren, so dass das Stückgut zwischen den Klemmbacken eingeklemmt ist. Die Klemmbacken mit eingeklemmtem Stückgut werden dann wieder aus dem Regalfach herausgefahren, wobei das Stückgut auf einen Ablagetisch des Bediengerätes gezogen wird. Sollen mehrere hintereinander in einem Regalfach angeordnete Stückgüter von mehreren Lagerplätzen ausgelagert werden, müssen die Klemmbacken entsprechend weiter in das Regalfach eingefahren werden, wobei eine Auslagerung von mehreren Stückgütern gewisse Bedingungen an die Maße und Anordnung der auszulagernden Stückgüter in dem Regalfach stellt.

Zum Einlagern eines Stückguts auf einem bestimmten Lagerplatz wird das Stückgut zunächst auf den Ablagetisch des Bediengerätes gebracht, und das Bediengerät anschließend zu dem Regalfach mit dem gewünschten Lagerplatz verfahren. Die Klemmbacken können kurz vor dem eigentlichen Auslagern derart bewegt werden, dass sie fast an den Seiten des auszulagernden Stückgutes anliegen; die Klemmbacken können auf diese Weise eine Art Führung für das Stückgut bereitstellen.

Ein gegenüber der dem Regalboden zugordneten Stirnseite des Bediengerätes angeordneter Schieber wird dann ausgefahren, um das Stückgut, ggf. bei gleichzeitiger Führung durch die Klemmbacken, auf den Regalboden und zu dem gewünschten Lagerplatz zu schieben.

Aufgrund der Anordnung des Schiebers bei einer Stirnseite des Bediengeräts ist eine Einlagerung und Auslagerung nur über die "andere" Stirnseite möglich, d.h. Einlagerung und Auslagerung erfolgen bei derselben Stirnseite. Soll ein Stückgut von einem ersten Regalboden ausgelagert und auf einem gegenüberliegenden zweiten Regalboden gelagert werden, ist es konstruktionsbedingt notwendig, dass das Bediengerät nach dem Auslagern von dem ersten Regalboden um 180° um die Vertikalachse gedreht wird, so dass die Einlagerungs- und Auslagerungsseite dem zweiten Regalboden zugewandt ist. Nachteilig bei dem vorgenannten Bediengerät ist ferner, dass dieses lediglich dazu geeignet ist, Stückgüter von auf horizontalen Regalböden befindlichen Lagerplätzen auszulagern oder auf diesen einzulagern.

Es ist daher Aufgabe der vorliegenden Erfindung, ein Bediengerät bereitzustellen, welches über gegenüberliegende Stirnseiten Stückgüter auf Lagerplätze in unterschiedlich ausgerichteten Lagerarten einlagern und von diesen auslagern kann.

Im Rahmen dieser Anmeldung wird regelmäßig der Begriff "Stückgut" verwendet, wobei von dieser Formulierung auch der Plural umfasst sein soll; mit dem erfindungsgemäßen Bediengerät kann ein Stückgut oder eine Mehrzahl von Stückgütern gleichzeitig ein- und ausgelagert werden.

Die Aufgabe wird erfindungsgemäß gelöst durch ein Bediengerät mit den Merkmalen des Patentanspruches 1. Das erfindungsgemäße Bediengerät für eine Kommissioniervorrichtung mit gegenüber angeordneten Lagerplätzen umfasst einen Ablagetisch mit zwei sich gegenüberliegenden Einlagerungs- und Auslagerungsseiten und zwei Längsseiten, wobei sich zwischen den Einlagerungs- und Auslagerungsseiten entlang einer ersten horizontalen Richtung ein Transportkanal zur Aufnahme wenigstens eines Stückguts erstreckt.

Der Ablagetisch des erfindungsgemäßen Bediengerätes ist so konzipiert, das Stückgüter über eine Einlagerungs- und Auslagerungsseite auf den Ablagetisch gelangen können, und über die andere gegenüberliegende (oder die gleiche) Einlagerungs- und Auslagerungsseiten von dem Ablagerungstisch auf einen Lagerplatz gebracht werden können. Der sich entlang der ersten horizontalen Richtung erstreckende Transportkanal stellt kein bauliches Merkmal des Bediengerätes selber dar, sondern wird von Teilen des Bediengeräts definiert und soll einen Transportweg zwischen den Einlagerungs- und Auslagerungsseiten definieren, entlang welchem Stückgüter bewegt werden können. Dabei ist die Formulierung "entlang der ersten horizontalen Richtung" so auszulegen, dass die Stückgüter in diese und entgegen dieser Richtung bewegt werden können.

Das erfindungsgemäße Bediengerät umfasst ferner zwei über dem Ablagetisch angeordnete langgestreckte Klemmbacken mit einander zugewandten ebenen Klemmflächen, die zumindest abschnittsweise eine seitliche Begrenzung des Transportkanals definieren und die mit einer Antriebseinheit gekoppelt sind, um gemeinsam entlang der ersten horizontalen Richtung bewegt zu werden, und die mit einer zweiten Antriebseinheit gekoppelt sind, um entlang einer zweiten horizontalen Richtung quer zur ersten horizontalen Richtung aufeinander zu und voneinander weg bewegt zu werden, so dass wenigstens ein Stückgut zwischen den Klemmflächen gehalten und dabei entlang der ersten horizontalen Richtung bewegt werden kann.

Schließlich umfasst das erfindungsgemäße Bediengerät zumindest eine Schiebeeinrichtung mit einem Antrieb zum Bewegen eines Abschnitts der Schiebeeinrichtung entlang der ersten horizontalen Richtung, wobei die Schiebeeinrichtung einen mit dem Antrieb gekoppelten Mitnehmer aufweist, der zumindest teilweise in den Transportkanal einbringbar und aus diesem entfernbar ist und der entlang der ersten horizontalen Richtung in dem Transportkanal oberhalb des Ablagetisches derart bewegbar ist, dass das zumindest eine Stückgut über eine Einlagerungs- und Auslagerungsseite zumindest abschnittsweise aus dem Transportkanal bewegbar ist. Wesentlich für die Erfindung ist, dass der Mitnehmer auch wieder aus dem Transportkanal entfernbar ist, da ansonsten kein Transport über die komplette Länge des Kanals von der einen zu der anderen Einlagerungs- und Auslagerungsseite möglich ist.

Das erfindungsgemäße Bediengerät umfasst damit zwei Baugruppen zum Bewegen von Stückgütern. Zum einen die über dem Ablagetisch angeordneten langgestreckten Klemmbacken mit ihren zugeordneten Antriebseinheiten, mit denen Stückgüter von vertikalen Lagerplätzen ausgelagert werden können, und die bei der Auslagerung von vertikalen Lagerplätzen unterstützend wirken können.

Und zum anderen die Schiebeeinrichtung, mit welcher Stückgüter von dem Ablagetisch auf einen Lagerplatz geschoben werden können. Dabei ist es nicht erforderlich, dass der Lagerplatz auf einem horizontalen Regalboden ausgebildet ist. Der Lagerplatz kann sich auch in einem geneigten Schacht befinden. Zum Einlagern in einen geneigten, von dem Ablagetisch aus abfallenden Schacht wird das Stückgut über die bei der Stirnseite des Schachts befindliche Einlagerungs- und Auslagerungsseite hinaus in den Schacht eingeschoben und rutsch schwerkraftbedingt in dem Schacht bis zu einem Anschlag nach unten, der durch ein anderes Stückgut oder einen Freigabemechanismus am Schachtende bereitgestellt sein kann.

Erfindungsgemäß ist der Mitnehmer der Schiebeeinrichtung in den Transportkanal einbringbar und aus diesem wieder entfernbar, so dass der Mitnehmer nicht dauerhaft in dem Transportkanal verbleibt und so eine freie Bewegung eines Stückgutes von einer Einlagerungs- und Auslagerungsseite zur gegenüberliegenden Einlagerungs- und Auslagerungsseite nicht blockiert ist.

So ist es erfindungsgemäß möglich, mit den Klemmbacken ein Stückgut von einem bei einer Einlagerungs- und Auslagerungsseite befindlichen horizontalen Lagerplatz auf den Ablagetisch zu ziehen, den Mitnehmer der Schiebeeinrichtung im Bereich dieser Einlagerungs- und Auslagerungsseite "hinter" dem Stückgut in den Transportkanal einzubringen und das Stückgut mit Hilfe des in dem Transportkanal oberhalb des Ablagetisches bewegbaren Mitnehmers zu der gegenüberliegenden Einlagerungs- und Auslagerungsseite zu schieben und schließlich über die gegenüberliegende Einlagerungs- und Auslagerungsseite auszulagern (in einen Schacht oder auf einen horizontalen Regalboden).

Die erfindungsgemäße Ausbildung des Bediengerätes macht es somit möglich, Stückgüter von gegenüberliegenden Lagerplätzen ein- und auszulagern, ohne dass dazu eine Drehung des Bediengerätes um die Vertikalachse notwendig wäre. Die gegenüberliegenden Lagerplätze müssen dabei nicht zu den gleichen "Lagerarten" (Schachtsystem und ebene Regalböden) gehören.

Ein weiterer Vorteil des erfindungsgemäßen Bediengerätes ist es, dass ich mit diesem Stückgüter rascher in der Kommissioniervorrichtung von einem Lagerplatz A zu einem Lagerplatz B umlagern lassen (da die Drehung um die Vertikalachse wegfällt), ferner können die gegenüber angeordneten Regalreihen dichter beieinander stehen, da eine Drehung um die Vertikalachse nicht mehr notwendig ist.

Der Mitnehmer der Schiebeeinrichtung kann über dem Ablagetisch und über oder unter den langgestreckten Klemmbacken entlang der ersten horizontalen Richtung bewegt und entsprechend von der Seite in den Transportkanal eingebracht und wieder aus diesem entfernt werden. Dazu ist es jedoch notwendig, dass an einer Längsseite des Bediengerätes die Schiebeeinrichtung mit all ihren Bauteilen zur Bewegung des Mitnehmers angeordnet ist. Da an den Längsseiten des Bediengerätes jedoch üblicherweise auch die Bauteile zur Bewegung der Klemmbacken angeordnet sind, ist eine solche Anhäufung von Bauteilen bei einer Längsseite konstruktiv aufwendig.

Bei einer bevorzugten Ausführungsform ist es daher vorgesehen, dass der Ablagetisch eine sich entlang der ersten horizontalen Richtung erstreckende Ausnehmung aufweist, aus welcher der Mitnehmer zumindest teilweise in den Transportkanal einbringbar ist und in welcher der Mitnehmer entlang der ersten horizontalen Richtung bewegbar ist. Die Bauteile der Schiebeeinrichtung sind damit nicht bei einer Längsseite des Bediengerätes, sondern in einer Ausnehmung des Ablagetisches angeordnet, so dass keine Konzentration der Bauteile bei einer Längsseite des Bediengerätes notwendig ist. In einem solchen Fall ist der Mitnehmer derart mit dem Antrieb gekoppelt, dass der Mitnehmer über die Ebene des Ablagetisches bewegt werden kann, oberhalb der Ebene des Ablagetisches in der ersten horizontalen Richtung (zum Schieben eines Stückgutes) bewegbar ist und schließlich auch wieder unter die Ebene des Ablagetisches gebracht werden kann.

Damit der Mitnehmer Stückgüter auf dem Auflagetisch von und zu beiden Einlagerungs- und Auslagerungsseiten schieben kann, ist es notwendig, dass dieser bei beiden Einlagerungs- und Auslagerungsseiten in den Kanal einbringbar und aus diesem entfernbar ist. Dies erfordert eine konstruktiv aufwendige Gestaltung der Schiebeeinrichtung. Bei einer bevorzugten Ausführungsform ist es daher vorgesehen, dass das Bediengeräte eine zweite Schiebeeinrichtung mit einem Antrieb und einem Mitnehmer aufweist, wobei die Mitnehmer der ersten und der zweiten Schiebeeinrichtung getrennt voneinander aus der Ausnehmung zumindest teilweise in den Transportkanal einbringbar und in diesem entlang der ersten horizontalen Richtung bewegbar sind. Dabei sind die beiden Schiebeeinrichtungen derart aufeinander abgestellt, dass mit ihnen Stückgüter in entgegengesetzte Richtungen bewegt werden können.

Das erfindungsgemäße Bediengerät ist so ausgebildet, dass es Stückgüter auf verschieden gestaltete Lagerplätze einlagern- und von diesem auslagern kann. Bei geneigten Lagerplätzen, die von einer angrenzenden Einlagerungs- und Auslagerungsseite abfallend ausgebildet sind, rutschen die Stückgüter üblicherweise schwerkraftbedingt bis zu einem Anschlag. Bei der Verwendung von sehr kleinen Stückgütern kann es aber vorkommen, dass sich der Schwerpunkt des Stückgutes noch über dem Ablagetisch befindet wenn ein Mitnehmer ganz zu einer Einlagerungs- und Auslagerungsseite bewegt ist. Um zu ermöglichen, dass das Stückgut derart über eine Einlagerungs- und Auslagerungsseite bewegt werden kann, dass der Schwerpunkt jenseits der Einlagerungs- und Auslagerungsseite ist (sprich bereits über dem Lagerort), ist es bei einer bevorzugten Ausführungsform vorgesehen, dass ein Mitnehmer eine Nase aufweist, welche über eine Auslagerungs- und Einlagerungsseite hinweg bewegbar ist.

Diese Ausführungsform hat einen weiteren Vorteil. Die Nasen der Mitnehmer sind derart ausgebildet, dass diese über die Auslagerungs- und Einlagerungsseiten hinweg bewegt werden können. Stückgüter lassen sich vollständig von dem Ablagetisch auf einen Lagerplatz schieben. Mit einem entsprechend ausgebildeten Bediengerät können Stückgüter auch in einen ansteigenden Schacht geschoben werden. Dazu werden die Stückgüter zunächst vollständig in den Schacht eingeschoben, in welchem sie mit der Nase gehalten werden. Dann kann der Kanal durch eine geeignete Schließeinrichtung, die an die Ausgestaltung der Nase angepasst ist, verschlossen werden und der Mitnehmer kann zurück bewegt werden. Das Stückgut wird dann von der Schließeinrichtung in dem Kanal gehalten. Um zu vermeiden, dass sich das Stückgut bei dem "Hochschieben" verkeilt, können die Klemmbacken unterstützend eingesetzt werden.

Bei einer bevorzugten Ausführungsform des erfindungsgemäßen Bediengerätes weist die Schiebeeinrichtung eine Führungseinrichtung auf, wobei die Führungseinrichtung eine sich entlang der ersten horizontalen Richtung (x) erstreckende Führung aufweist, entlang welcher der Mitnehmer durch den Transportkanal bewegbar ist, und welche zumindest bei einem Endbereich einen sich von dem Ablagetisch wegerstreckenden Abschnitt aufweist, über welchen der Mitnehmer aus dem Transportkanal bewegbar ist. Die Führungseinrichtung kann, in Kombination mit der Ausnehmung in dem Ablagetisch, unterhalb des Ablagetisches, oder bei einer Längsseite des Ablagetisches angeordnet sein.

Die Verwendung einer entsprechend ausgebildeten Führung unterhalb des Ablagetisches stellt eine besonders einfache konstruktive Lösung dar, den Mitnehmer bei einer Position in Bezug auf den Ablagetisch aus dem Transportkanal zu entfernen. Dazu ist die Führung für den Mitnehmer in diesem Bereich von dem Ablagetisch weggeführt (entweder nach unten oder seitlich), so dass bei Führung des Mitnehmers in diesen Bereich der Mitnehmer selber aus dem Transportkanal entfernt wird.

Die Klemmbacken werden zum Auslagern von Stückgütern von einem horizontalen Lagerplatz über eine Einlagerungs- und Auslagerungsseite des Ablagetisches hinweg zwischen zwei Regalböden bzw. in ein Regalfach geschoben. Dazu werden viele der die Bewegung der Klemmbacken steuernden Bauteile entlang der Längsseiten des Ablagetisches bewegt. Um eine konstruktiv besonders kompakte Bauweise zu erreichen, ist es bei einer bevorzugten Ausführungsform des Bediengerätes vorgesehen, dass die erste Antriebseinheit und die zweite Antriebseinheit in einem U-förmigen Antriebsbauteil angeordnet sind, das den Transportkanal überspannt und an- bzw. unter beiden Längsseiten des Ablagetisches geführt ist.

Das erfindungsgemäße Bediengerät ist dazu vorgesehen, nicht nur ein Stückgut, sondern gleich mehrere Stückgüter gleichzeitig ein- und auszulagern. Um den Transport der Stückgüter auf dem Ablagetisch zu vereinfachen ist es bei einer bevorzugten Ausführungsform vorgesehen, dass dieser eine Beschichtung mit einer geringen Haftreibung aufweist. Um sicherzustellen, dass sich die Klemmbacken in ihrem Klemmbereich besonders großflächig an den Stückgütern anlagern, ist es bei einer bevorzugten Ausführungsform vorgesehen, dass diese zumindest abschnittsweise aus einem federnden Material gebildet sind. Darüber hinaus ist es bevorzugt, dass die Klemmflächen der Klemmbacken eine Beschichtung mit hoher Haftreibung aufweisen, um so zu vermeiden, dass die Klemmflächen, insbesondere beim Auslagern einer Mehrzahl von Stückgütern, an den Seitenflächen der auszulagernden Stückgüter abrutschen.

Im Nachfolgenden wird die Erfindung anhand einer bevorzugten Ausführungsform unter Bezugnahme auf die beigefügte Zeichnung beschrieben, in welcher
Figuren 1 und 2 perspektivische Ansichten einer Ausführungsform des Bediengerätes zeigen,
Figur 3 eine perspektivische Ansicht von unter dem Ablagetisch angeordneten Bauteile zeigt,
Figur 4 eine Draufsicht auf diese Bauteile zeigt,
Figur 5 eine perspektivische Detailansicht eines Abschnittes der Bauteile zeigt,
Figuren 6A-6C seitliche Schnittansichten des Ablagetisches mit darunter angeordneten Bauteilen bei verschiedenen Stellungen eines Mitnehmers zeigen, und
Figuren 7A und 7B seitliche Schnittansichten des Ablagetisches mit darunter angeordneten Bauteilen beim Einlagern eines Stückgutes zeigen.

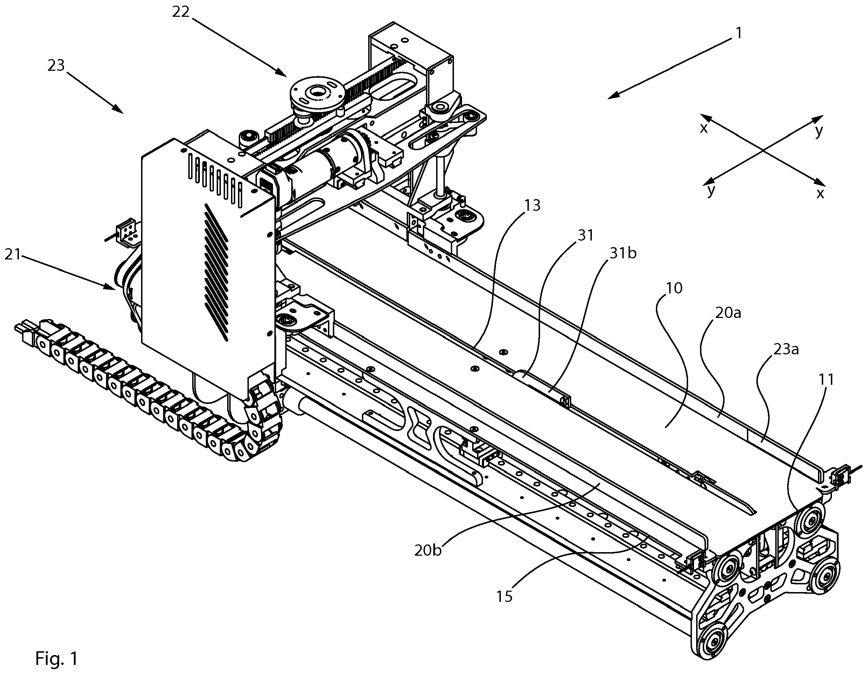

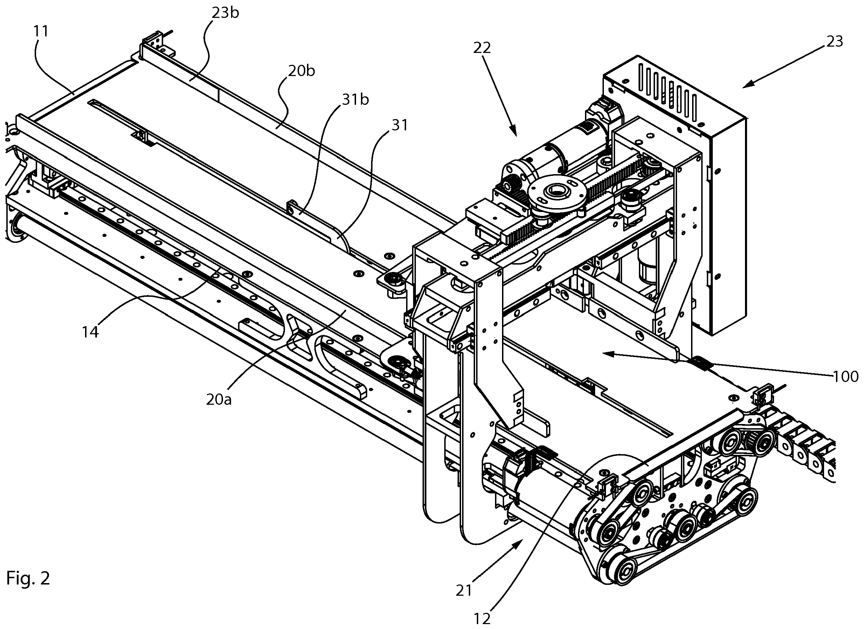

Die Figuren 1 und 2 zeigen perspektivische Ansichten einer Ausführungsform des erfindungsgemäßen Bediengerätes 1. Dieses umfasst einen langgestreckten Ablagetisch 10 mit zwei gegenüberliegenden Einlagerungs- und Auslagerungsseiten 11, 12 und zwei gegenüberliegenden Längsseiten 14, 15. Der Ablagetisch ist bei der gezeigten Ausführungsform also rechteckig ausgebildet, wobei dies für die vorliegende Erfindung nicht wesentlich ist. Zwischen den Einlagerungs- und Auslagerungsseiten 11, 12 erstreckt sich entlang einer ersten horizontalen Richtung x ein Transportkanal 100 (siehe Figur 2) zur Aufnahme und zum Transport von Stückgütern. Dieser Transportkanal 100 ist kein physisches Bauteil des erfindungsgemäßen Bediengerätes, sondern ist ein von Bauteilen des Bediengerätes definierter freier Raum, in welchem und durch welchen die Stückgüter bewegt werden können.

Der Ablagetisch 10 umfasst bei der gezeigten Ausführungsform eine sich entlang der ersten horizontalen Richtung x erstreckende Ausnehmung 13, in welcher ein Mitnehmer 31 mit einer Nase 31b geführt ist. Der Mitnehmer 31 ist Teil einer Schiebeeinrichtung, die unter Bezugnahme auf nachfolgende Figuren detaillierter beschrieben wird. Wie aber bereits den Figuren 1 und 2 zu entnehmen ist, ist der Mitnehmer 31 entlang der ersten horizontalen Richtung x in der Ausnehmung bewegbar.

Der Ablagetisch 10 wird bei der gezeigten Ausführungsform von einem U-förmigen Antriebsbauteil 23 überspannt, welches eine erste Antriebseinheit 21 und eine zweite Antriebseinheit 22 umfasst. Mit Hilfe der ersten Antriebseinheit 21 kann das U-förmige Antriebsbauteil entlang der Längsseiten 14, 15 des Ablagetisches 10 bewegt werden. Das Antriebsbauteil 23 trägt zwei Klemmbacken 20a, 20b, die bei den Ansichten gemäß Figuren 1 und 2 parallel zueinander bei den Längsseiten des Ablagetisches 10 angeordnet sind. Die Klemmbacken 20a, 20b sind schwenkbar an dem Antriebsbauteil 23 festgelegt und können über die zweite Antriebseinheit 22 in einer zweiten horizontalen Richtung y, die orthogonal zu der ersten horizontalen Richtung x ist, verschwenkt werden, und zwar derart, dass die Spitzen der Klemmbacken 20a, 20b aufeinander zu und voneinander weg bewegt werden können. Mit Hilfe einer solchen Bewegung können Stückgüter, die auf einem vertikalen Regalboden angeordnet sind, nach dem Zusammenfahren der Spitzen der Klemmbacken von dem Regalboden auf den Ablagetisch 10 gezogen werden. In einem solchen Fall ist selbstverständlich der Mitnehmer 31 aus dem Transportkanal 100 entfernt, wobei dies bei der gezeigten Ausführungsform durchgeführt wird, indem der Mitnehmer 31 vollständig unter die Ebene des Ablagetisches 10 gefahren wird, was unter Bezugnahme auf nachfolgende Figuren näher beschrieben wird.

Bei der gezeigten Ausführungsform weisen die Klemmflächen der Klemmbacken bei den klemmenden Endabschnitten eine Beschichtung 23a, 23b mit hoher Haftreibung auf. Bei ihren entgegengesetzten Endabschnitten sind die Klemmbacken 20a, 20b an dem Antriebsbauteil 23 festgelegt, was für die Erfindung als solche jedoch nicht wesentlich ist. Das Bediengerät könnte beispielsweise auch über vier Klemmbacken verfügen, die bei gegenüberliegenden Seiten des Antriebsbauteils 23 schwenkbar angeordnet sind, womit die Möglichkeit bestände, dass bei beiden Einlagerungs- und Auslagerungsseiten Stückgüter von horizontalen Lagerplätzen ausgelagert werden könnten. Ferner ist es denkbar, dass die Klemmbacken selber, und nicht das Antriebsbauteil, an welchem sie befestigt sind, verfahrbar sind, so dass zwei Klemmbacken ausreichen würden, bei beiden Einlagerungs- und Auslagerungsseiten 11, 12 des Bediengerätes Stückgüter von horizontalen Lagerplätzen auszulagern. Die Antriebseinheiten für die Klemmbacken müssten dann entsprechend angepasst sein.

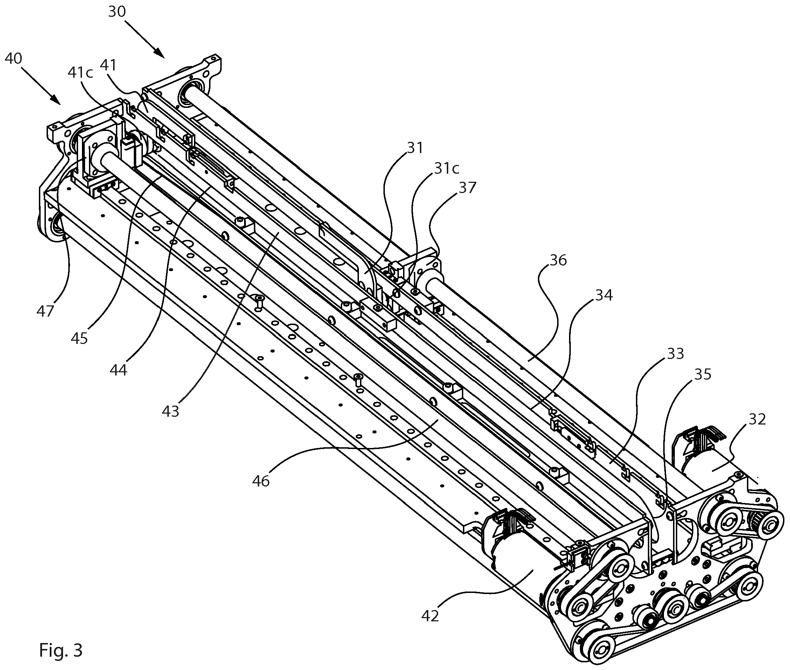

Figur 3 zeigt eine perspektivische Ansicht von unter dem Ablagetische angeordneten Bauteilen des Bediengerätes. Bei der gezeigten Ausführungsform sind unterhalb des Ablagetisches 10 zwei Schiebeeinrichtungen 30, 40 angeordnet, die für eine Bewegung von Mitnehmern 31, 32 in und aus dem Transportkanal und entlang der ersten horizontalen Richtung innerhalb des Transportkanals zuständig sind. Dazu umfasst der Ablagetisch 10 eine entsprechende Ausnehmung 13 (siehe Figuren 1 und 2), in welcher die Mitnehmer 31, 41 bewegbar sind.

Jede der Schiebeeinrichtungen 30, 40 umfasst eine längliche, parallel zu bzw. entlang der ersten horizontalen Richtung ausgebildete Führungseinrichtung 33, 43. Jede Führungseinrichtung umfasst eine sich entlang der ersten horizontalen Richtung erstreckende Führung 34, 44, welche bei der gezeigten Ausführungsform eine langgestreckte, parallel zum Ablagetisch ausgebildete Ausnehmung umfasst. In einem Endbereich jeder Führungseinrichtung 33, 43 geht die Führung 34, 44 in einen sich nach unten erstreckenden Abschnitt 35, 45 über.

Die Mitnehmer 31, 41 umfassen bei ihrem unteren Ende ein kreisförmiges, nach außen abstehendes Führungsmittel 31c, mit welchem die Mitnehmer in der Führung 34, 44 geführt sind. Die Mitnehmer 31, 32 werden über ein mit den Mitnehmern verbundenes Getriebeteil 37, 47 bewegt, welches wiederum über eine mit einem Außengewinde versehene Welle 36, 37 mit einem Antrieb 32, 42 gekoppelt ist.

Werden die Mitnehmer 31, 41 über die Antriebe 32, 42, die Wellen 36, 46 und die Getriebeteile 37, 47 in die sich vom Ablagetisch 10 wegerstreckenden Abschnitt 35, 45 bewegt, werden die Mitnehmer 31, 41 über die Führungsmittel 31c, 41c von dem Ablagetisch 10 wegbewegt. Bei der in Figur 3 gezeigten Ausführungsform bedeutet dies, dass die Mitnehmer 31, 41 "nach unten" bewegt werden, d.h. die Mitnehmer werden aus dem Transportkanal nach unten wegbewegt. In dem langgestreckten, parallel zum Ablagetisch ausgebildeten Bereich der Führung, der bei Figur 3 für den Mitnehmer 31 gezeigt ist, ragt zumindest ein Abschnitt des Mitnehmers 31 über die Ebene des Ablagetisches 10 hinaus (und damit in den Transportkanal 100).

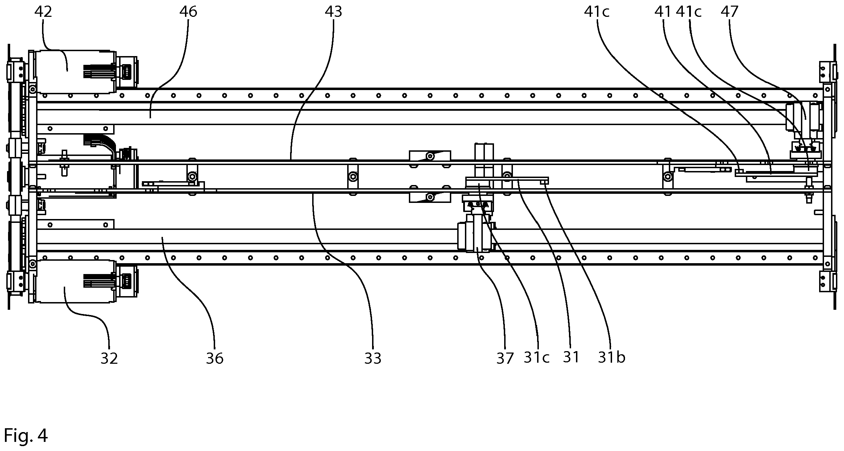

Figur 4 zeigte eine Draufsicht auf die unterhalb des Ablagetisches 10 angeordneten Bauteile der Schiebeeinrichtungen 30, 40. Wie dieser Ansicht zu entnehmen ist, sind die Führungseinrichtungen 33, 43 parallel zueinander angeordnet, und die Mitnehmer 31, 41 sind derart in den Führungen der Führungseinrichtungen angeordnet, dass die Nasen der Mitnehmer entgegengesetzt angeordnet sind, so dass mit Mitnehmer 31 Stückgüter "nach rechts" und mit Mitnehmer 41 Stückgüter "nach links" auf dem Ablagetisch bewegt werden können.

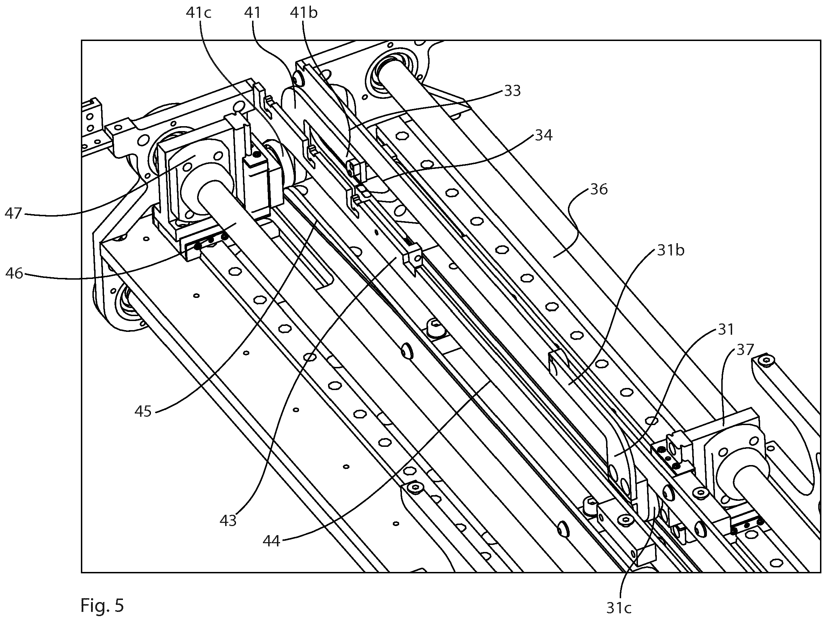

Figur 5 zeigt eine perspektivische Detailansicht eines Abschnittes der unter dem Ablagetisch angeordneten Bauteile, wobei diese im Wesentlichen bereits unter Bezugnahme auf Figur 3 beschrieben wurden. Figur 5 ist insbesondere zu entnehmen, dass die Führungseinrichtung 43 bzw. die Führung 44 im "oberen" Bereich einen sich von dem Ablagetisch wegerstreckenden Abschnitt 45 aufweist. Da die Führungseinrichtung 43 bei der gezeigten Ausführungsform unterhalb des Ablagetisches angeordnet ist, bedeutet dies im vorliegenden Fall, dass sich der Abschnitt 45 nach unten erstreckt. Wird der Mitnehmer über sein Führungsmittel 41c entlang der Führung 44 in diesen sich nach unten erstreckenden Bereich geführt, wird der Mitnehmer nach "unten" gezogen, und somit wird der Mitnehmer, der bei dem langgestreckten Teil der Führung 44 in den Transportkanal eingetaucht ist, aus dem Transportkanal entfernt. Der Mitnehmer 31 ist bei der gezeigten Stellung in dem langgestreckten Teil der Führung 34 angeordnet und taucht somit in den Transportkanal ein.

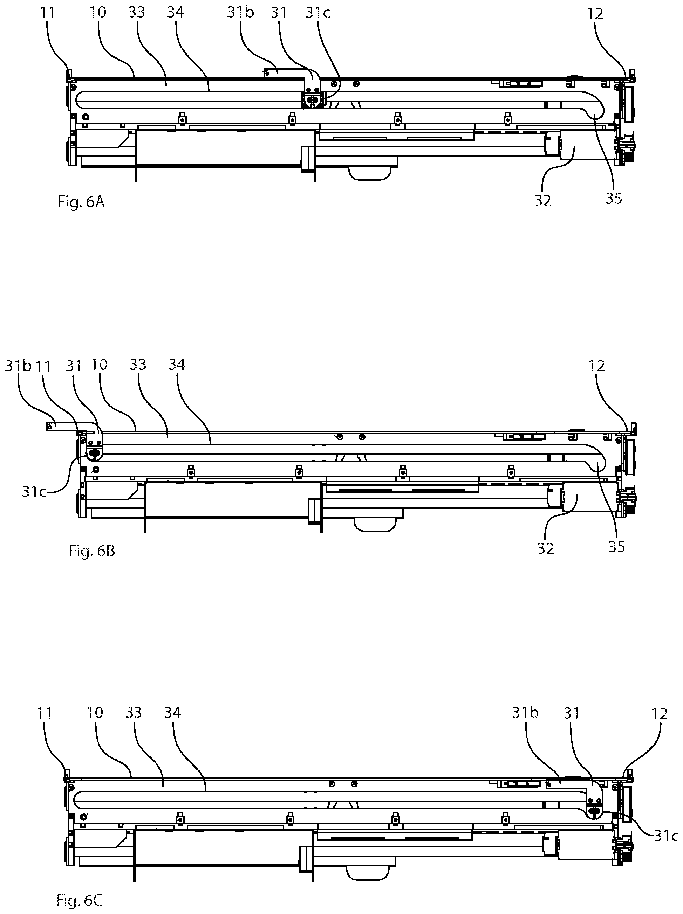

Die Figuren 6A-6C zeigen seitliche Schnittansichten des Ablagetisches 10 sowie der darunter angeordneten Bauteile, wobei der Schnitt derart geführt ist, dass lediglich die Bauteile der ersten Schiebeeinrichtung 30 zu erkennen sind. Bei Figur 6A ist der Mitnehmer in dem langgestreckten, parallel zum Ablagetisch ausgebildeten Abschnitt der Führung 34 der Führungseinrichtung 33 angeordnet, und es ist zu erkennen, dass der Mitnehmer 31 zumindest abschnittsweise mit der Nase 31b über dem Ablagetisch 10 angeordnet ist, d.h. in den Transportkanal eingreift.

Bei Figur 6B ist der Mitnehmer 31 im Endbereich der Führung 34 angeordnet, wobei dieser Endbereich dem Abschnitt gegenüberliegt, bei welchem sich die Führung 34 von dem Ablagetisch wegerstreckt. Bei dieser Darstellung ist zu erkennen, dass die Nase 31b des Mitnehmers über die Einlagerungs- und Auslagerungsseite 11 des Ablagetisches 10 herausragt.

Bei der Darstellung gemäß Figur 6C ist der Mitnehmer 31 samt Nase 31b und Führung 31c vollständig in den sich von dem Ablagetisch wegerstreckenden Abschnitt 35 der Führung 34 bewegt. Der Abschnitt 35 erstreckt sich bei der gezeigten Ausführungsform nach unten (gemäß der Anordnung der Schiebeeinrichtung unterhalb des Ablagetisches), wodurch der Mitnehmer 31 bei Bewegung in diesen Abschnitt über sein Führungsmittel 31c nach unten, und damit aus dem Transportkanal, bewegt wird.

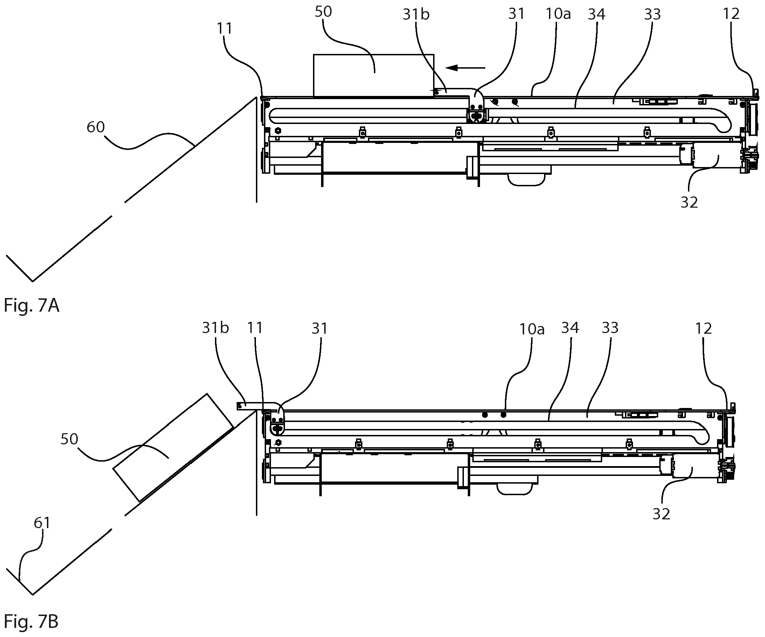

Figuren 7A und 7B zeigen seitliche Schnittansichten des Ablagetisches 10 sowie der darunter angeordneten Bauteile, wobei bedingt durch die Schnittansicht lediglich die Bauteile der ersten Führungseinrichtung 30 dargestellt sind. Bei der Darstellung gemäß Figur 7A ist ein Stückgut 50 auf dem Ablagetisch 10 und in dem Transportkanal angeordnet. Der Mitnehmer 31 bewegt das Stückgut 50 auf dem Auflagetisch 10, der eine haftreduzierende Beschichtung 10a aufweist, nach links hin zu der Einlagerungs- und Auslagerungsseite 11. Bei der Darstellung gemäß Figur 7B hat der Mitnehmer 31 das Stückgut 50 über die Einlagerungs- und Auslagerungsseite 11 hinaus in den Kanal 60 geschoben, in welchem das Stückgut bis zu einem Anschlag 61 rutschen wird.

## Patentansprüche

1. Bediengerät (1) für eine Kommissioniervorrichtung mit gegenüber angeordneten Lagerplätzen, aufweisend:
einen Ablagetisch (10) mit zwei sich gegenüberliegenden Einlagerungs- und Auslagerungsseiten (11, 12) und zwei Längsseiten (14, 15), wobei sich zwischen den Einlagerungs- und Auslagerungsseiten (11, 12) entlang einer ersten horizontalen Richtung (x) ein Transportkanal (100) zur Aufnahme wenigstens eines Stückguts erstreckt,
zwei über dem Ablagetisch (10) angeordnete langgestreckte Klemmbacken (20a, 20b) mit einander zugewandten ebenen Klemmflächen, die zumindest abschnittsweise eine seitliche Begrenzung des Transportkanals (100) definieren und die mit einer ersten Antriebseinheit (21) gekoppelt sind, um gemeinsam entlang der ersten horizontalen Richtung (x) bewegt zu werden, wobei die Klemmbacken (20a, 20b) mit einer zweiten Antriebseinheit (22) gekoppelt sind, um entlang einer zweiten horizontalen Richtung (y) quer zur ersten horizontalen Richtung (x) aufeinander zu und voneinander weg bewegt zu werden, so dass wenigstens ein Stückgut zwischen den Klemmflächen gehalten und dabei entlang der ersten horizontalen Richtung (x) bewegt werden kann, **dadurch gekennzeichnet, dass** das Bediengerät (1) zumindest eine Schiebeeinrichtung (30) mit einem Antrieb (32) zum Bewegen eines Abschnitts der Schiebeeinrichtung (30) entlang der ersten horizontalen Richtung (x) umfasst, wobei die Schiebeeinrichtung einen mit dem Antrieb (32) gekoppelten Mitnehmer (31) aufweist, der zumindest teilweise in den Transportkanal (100) einbringbar und aus diesem entfernbar ist und der entlang der ersten horizontalen Richtung (x) in dem Transportkanal (100) oberhalb des Ablagetisches (10) derart bewegbar ist, dass das zumindest ein Stückgut über eine Einlagerungs- und Auslagerungsseite (11, 12) zumindest abschnittsweise aus dem Transportkanal (100) bewegbar ist.

2. Bediengerät (1) nach Anspruch 1, **dadurch gekennzeichnet, dass** der Ablagetisch (10) eine sich entlang der ersten horizontalen Richtung (x) erstreckende Ausnehmung (13) aufweist, aus welcher der Mitnehmer (32) zumindest teilweise in den Transportkanal (100) einbringbar ist und in welcher der Mitnehmer (32) entlang der ersten horizontalen Richtung (x) bewegbar ist.

3. Bediengerät (1) nach Anspruch 2, **dadurch gekennzeichnet, dass** das Bediengerät eine zweite Schiebeeinrichtung (40) mit einem Antrieb (42) und einem Mitnehmer (41) aufweist, wobei beide Mitnehmer (31, 41) getrennt voneinander aus der Ausnehmung (13) zumindest teilweise in den Transportkanal (100) einbringbar und in diesem entlang der ersten horizontalen Richtung (x) bewegbar sind.

4. Bediengerät (1) nach einem der Ansprüche 1 - 3, **dadurch gekennzeichnet, dass** ein Mitnehmer (31, 41) eine Nase (31b, 41b) aufweist, welche über eine Auslagerungs- und Einlagerungsseite (11, 12) hinweg bewegbar ist.

5. Bediengerät (1) nach einem der Ansprüche 1 - 4, **dadurch gekennzeichnet, dass** die Schiebeeinrichtung (30, 40) eine Führungseinrichtung (33, 43) aufweist, wobei die Führungseinrichtung (33, 43) eine sich entlang der ersten horizontalen Richtung (x) erstreckende Führung (34, 44) aufweist, entlang welcher der Mitnehmer (31, 41) durch den Transportkanal (100) bewegbar ist, und welche zumindest bei einem Endbereich einen sich von dem Ablagetisch (10) weg erstreckenden Abschnitt (35, 45) aufweist, über welchen der Mitnehmer (31, 41) aus dem Transportkanal (100) bewegt wird.

6. Bediengerät (1) nach einem der Ansprüche 1 - 5, **dadurch gekennzeichnet, dass** die erste Antriebseinheit (21) und die zweite Antriebseinheit (22) in einem U-förmigen Antriebsbauteil (23) angeordnet sind, das den Transportkanal (100) überspannt und an bzw. unter den Längsseiten (14, 15) des Ablagetisches (10) geführt ist.

7. Bediengerät (1) nach einem der Ansprüche 1 - 6, **dadurch gekennzeichnet, dass** der Ablagetisch (10) zumindest abschnittsweise eine Beschichtung (10a) mit geringer Haftreibung aufweist.

8. Bediengerät (1) nach einem der Ansprüche 1 - 7, **dadurch gekennzeichnet, dass** die Klemmbacken (20a, 20b) zumindest abschnittsweise aus einem federnden Material gebildet sind.

9. Bediengerät (1) nach einem der Ansprüche 1 - 8, **dadurch gekennzeichnet, dass** die Klemmflächen der Klemmbacken (20a, 20b) zumindest abschnittsweise eine Beschichtung mit hoher Haftreibung (23a, 23b) aufweisen.

## Claims

1. An operating device (1) for a picking system with oppositely arranged storage places, having:
a delivery table (10) with two opposing storage and retrieval sides (11, 12) and two longitudinal sides (14, 15), wherein a transport channel (100) for accommodating at least one piece goods item extends between the storage and removal sides (11, 12) along a first horizontal direction (x),
two elongated clamping jaws (20a, 20b) arranged above the delivery table (10) with mutually facing planar clamping surfaces, which, at least partially, define a lateral boundary of the transport channel (100), and which are coupled to a first drive unit (21), so as to be moved together along the first horizontal direction (x), wherein
the clamping jaws (20a, 20b) are coupled to a second drive unit (22) so as to be moved toward and away from each other transversely to the first horizontal direction (x) along a second horizontal direction (y), so that at least one piece goods item can be held between the clamping surfaces and can thereby be moved along the first horizontal direction (x),
**characterised in that**, the operating device (1) comprises at least one sliding device (30) with a drive (32) for moving a section of the sliding device (30) along the first horizontal direction (x), wherein
the sliding device has a driver (31), which is coupled to the drive (32), and can, at least partially, be introduced into the transport channel (100) and can be removed therefrom (100), and which can be moved along the first horizontal direction (x) in the transport channel (100) above the delivery table (10) such that the at least one piece goods item can, at least partially, be moved out of the transport channel (100) by way of a storage and a removal side (11, 12).

2. The operating device (1) in accordance with claim 1, **characterised in that**, the delivery table (10) has a recess (13) extending along the first horizontal direction (x), from which the driver (32) can, at least partially, be introduced into the transport channel (100), and in which the driver (32) can be moved along a first horizontal direction (x).

3. The operating device (1) in accordance with claim 2, **characterised in that**, the operating device has a second sliding device (40) with a drive (42) and a driver (41), wherein both drivers (31, 41) can, at least partially, be introduced separately from one another into the transport channel (100) from the recess (13), and can be moved in the latter along the first horizontal direction (x).

4. The operating device (1) in accordance with one of the claims 1 to 3, **characterised in that**, a driver (31, 41) has a nose (31b, 41b), which can be moved over a removal and storage side (11, 12).

5. The operating device (1) in accordance with one of the claims 1 to 4, **characterised in that**, the sliding device (30, 40) has a guiding device (33, 43), wherein the guiding device (33, 43) has a guide (34, 44) extending along the first horizontal direction (x), along which the driver (31, 41) can be moved through the transport channel (100), and which, at least in one end region, has a section (35, 45) extending away from the delivery table (10), by means of which the driver (31, 41) is moved out of the transport channel (100).

6. The operating device (1) in accordance with one of the claims 1 to 5, **characterised in that**, the first drive unit (21) and the second drive unit (22) are arranged in a U-shaped drive component (23) which spans the transport channel (100) and is guided on or under the longitudinal sides (14, 15) of the delivery table (10).

7. The operating device (1) in accordance with one of the claims 1 to 6, **characterised in that**, the delivery table (10) has, at least in one section, a coating (10a) with a low static friction.

8. The operating device (1) in accordance with one of the claims 1 to 7, **characterised in that**, the clamping jaws (20a, 20b) are formed at least in one section, from a resilient material.

9. The operating device (1) in accordance with one of the claims 1 to 8, **characterised in that**, the clamping surfaces of the jaws (20a, 20b) have, at least in one section, a coating with a high static friction (23a, 23b).

## Revendications

1. Appareil de commande (1) pour un dispositif de préparation de commandes avec des emplacements de stockage disposés les uns en face des autres, comprenant :
une table de dépose (10) avec deux côtés de stockage et de déstockage opposés (11, 12) et deux côtés longitudinaux (14, 15), un canal de transport (100) destiné à recevoir au moins un article s'étendant le long d'une première direction horizontale (x) entre les côtés de stockage et de déstockage (11, 12),
deux mâchoires de serrage (20a, 20b) allongées disposées au-dessus de la table de dépose (10) avec des surfaces de serrage planes tournées les unes vers les autres, lesquelles définissent au moins par endroits une délimitation latérale du canal de transport (100), et lesquelles sont accouplées à une première unité d'entraînement (21), pour être déplacées conjointement le long de la première direction horizontale (x),
dans lequel les mâchoires de serrage (20a, 20b) sont accouplées à une deuxième unité d'entraînement (22), pour être déplacées l'une vers l'autre et l'une à distance de l'autre le long d'une deuxième direction horizontale (y) perpendiculaire à la première direction horizontale (x), de manière à ce qu'au moins un article puisse être maintenu entre les surfaces de serrage et ainsi déplacé le long de la première direction horizontale (x),
**caractérisé en ce que** l'appareil de commande (1) comporte au moins un dispositif de poussée (30) avec un entraînement (32) pour le déplacement d'une section du dispositif de poussée (30) le long de la première direction horizontale (x),
dans lequel le dispositif de poussée présente un entraîneur (31) accouplé à l'entraînement (32), lequel peut être inséré au moins partiellement dans le canal de transport (100) et retiré hors de celui-ci et lequel est déplaçable le long de la première direction horizontale (x) dans le canal de transport (100) au-dessus de la table de dépose (10), de manière à pouvoir déplacer au moins un article au moins par endroits hors du canal de transport (100) par un côté de stockage et de déstockage (11, 12).

2. Appareil de commande (1) selon la revendication 1, **caractérisé en ce que** la table de dépose (10) présente un évidement (13) s'étendant le long de la première direction horizontale (x), à partir duquel l'entraîneur (32) peut être inséré au moins partiellement dans le canal de transport (100) et dans lequel l'entraîneur (32) peut être déplacé le long de la première direction horizontale (x).

3. Appareil de commande (1) selon la revendication 2, **caractérisé en ce que** l'appareil de commande présente un deuxième dispositif de poussée (40) avec un entraînement (42) et un entraîneur (41), les deux entraîneurs (31, 41) peuvent être insérés indépendamment l'un de l'autre au moins partiellement dans le canal de transport (100) à partir de l'évidement (13) et peuvent être déplacés dans celui-ci le long de la première direction horizontale (x).

4. Appareil de commande (1) selon l'une des revendications 1 à 3, **caractérisé en ce qu'**un entraîneur (31, 41) présente un nez (31b, 41b) déplaçable au-delà d'un côté de stockage et de déstockage (11, 12).

5. Appareil de commande (1) selon l'une des revendications 1 à 4, **caractérisé en ce que** le dispositif de poussée (30, 40) présente un dispositif de guidage (33, 43), le dispositif de guidage (33, 43) présentant un guidage (34, 44) s'étendant le long de la première direction horizontale (x), le long duquel l'entraîneur (31, 41) peut être déplacé à travers le canal de transport (100), et lequel présente une section (35, 45) s'étendant à distance de la table de dépose (10) au moins dans une région d'extrémité, l'entraîneur (31, 41) étant déplacé hors du canal de transport (100) par le biais de celle-ci.

6. Appareil de commande (1) selon l'une des revendications 1 à 5, **caractérisé en ce que** la première unité d'entraînement (21) et la deuxième unité d'entraînement (22) sont disposées dans une pièce d'entraînement en forme de U (23) chevauchant le canal de transport (100) tout en étant guidée sur ou sous les côtés longitudinaux (14, 15) de la table de dépose (10).

7. Appareil de commande (1) selon l'une des revendications 1 à 6, **caractérisé en ce que** la table de dépose (10) présente au moins par endroits un revêtement (10a) avec un faible frottement statique.

8. Appareil de commande (1) selon l'une des revendications 1 à 7, **caractérisé en ce que** les mâchoires de serrage (20a, 20b) sont constituées au moins par endroits d'un matériau élastique.

9. Appareil de commande (1) selon l'une des revendications 1 à 8, **caractérisé en ce que** les surfaces de serrage des mâchoires de serrage (20a, 20b) présentent au moins par endroits un revêtement avec un fort frottement statique (23a, 23b).
